# EUROPEAN PATENT SPECIFICATION

(11) **EP 1 373 782 B1**
(45) Date of publication and mention of the grant of the patent: **01.02.2006**
(21) Application number: 02712116.9
(22) Date of filing: 14.02.2002
(51) Int. Cl.: F16L 41/14, F16L 31/02, B60C 29/00

(54) **WATER OFF-TAKE FROM LAYFLAT HOSE, SPECIAL FITTING FOR WATER OFF-TAKE FROM A FLEXIBLE FLAT HOSE (LAYFLAT)**
WASSERENTNAHME AUS EINEM FALTBAREN SCHLAUCH, SPEZIALFITTING FÜR DIE WASSERENTNAHME AUS EINEM FALTBAREN SCHLAUCH
PRISE D'EAU SUR TUYAU SOUPLE DE TYPE LAYFLAT , RACCORD SPECIAL POUR PRISE D'EAU SUR TUYAU PLAT SOUPLE (LAYFLAT)

(30) Priority: 19.02.2001 GR 2001100087
(43) Date of publication of application: 02.01.2004
(73) Proprietor: Plexaco S.A., 151 27 Melissa (GR)
(72) Inventor: PANOURGIAS, Konstantinos, GR-157 72 Athens (GR); KARVELAS, Konstantinos Azaleas & Yiasemion, GR-340 08 Eretria (GR); PETSALAS, Iraklis, GR-146 71 N. Erithrea (GR)
(74) Representative: Sakellarides, Vasiliki-Vali
(86) International application number: PCT/GR2002/000007
(87) International publication number: WO 2002/066881

(56) References cited:
- EP-A- 0 284 570
- WO-A-99/45307
- DE-C- 229 800
- US-A- 2 137 223
- US-A- 4 654 942

## Description

The invention refers to the technical aspects of mounting secondary irrigation pipes to the main water supply pipe. In particular, it aims at the fitting of the secondary pipes to the main pipes, of the so called "layflat hose" type, meaning a hose from flexible plastic material with a flat surface.

Hoses with a flat surface offer the advantage to the farmer, after he has installed his water supply network, of being able to move any wheeled equipment or vehicle freely in the field, even passing over the layflat hoses, when they are not being used for irrigation and are not under pressure.

Document EP 0 284 570 describes a layflat hose with an outlet fitting consisting mainly of a flanged body with a concave frusto-conical shape and a washer with a convex frusto-conical profile complementary to that of the flange. Such an arrangement is even worse, regarding the water tightness of the system, than the flat ones, because of the higher tension and deformation of the compressed hose wall as the shape of the hose changes from flat (during fixation) to cylindrical (under pressure).

Using the current conventional technology, all central field irrigation lines are made either from rigid or from semirigid pipes and the relevant accessories for fitting to the secondary irrigation lines are available in the market.

However these pipes have the following serious disadvantages and handicaps:
- High cost of purchasing and installation.
- No possibility of any vehicle or wheeled machinery passing through the field and over the pipes, whilst the pipes are laid on the ground.
- When removed from the field they must be packed and coiled and furthermore an important amount of labour and cost is involved in their dismantling, transport, storage and reinstallation.

On the contrary, the layflat flexible hoses occupy minimal space, being flat when not under pressure, and their coiling, handling and reinstallation in the field is very easy. The basic problem encountered until today in using layflat flexible hoses as central irrigation pipelines, has been and still is the lack of an appropriate fitting for the connection of the secondary irrigation pipes to the main layflat supply line.

Water off-takes of similar type are known, but with flat shape of the surface clamping on to the layflat hose, after drilling the appropriate hole for insertion.

These off-takes placed in proper size holes, drilled on the wall of the layflat hose, do not offer full water proofness, resulting in the water coming into contact with the hose reinforcement yarns, thus causing the inflation of the hose and subsequent bursting of the walls after a short period of time.

This period depends on the pressure and temperature of the water, the type of yarn and the wall thickness of the hose. In this way, the inefficiency of the water off-taking fitting is attributed to a defect of the layflat hose.

The document DE 229800 refers to a valve arrangement for a double tube system in bicycle wheel and does not relate to a water off-take from layflat hose. The system of the valve provides that air tightness of the system is achieved through compression of the tube(3) wall(s) between two flat surfaces of the valve arrangement. Sealing is achieved by pressing the flat surface of a ring to the flat surface of the body. The cavity of the valve housing does not contribute to any sealing, but its conical shape at the one end acts as a guide for sealing of tightening nut, together with a conical ring, into the cavity, when the outer tube is filled with air. In cntrast, the fitting in the present application is primarily characterized in that the body and the ring of the fitting (between which the layflat hose is compressed) have a conical surface, this achieving full water tightness.

The document U5 46549420 refers to a method of manufacturing a branch hose contruction through a tubular insert in an opening of an existing hose and appropriate fixing of this insert to the hose. The fixing and sealing of the tubular branch on the hose are achieved by compression of the hose wall saddle-shaped flange of the tubular insert and a saddle-shaped washer and by compression of the hose wall between the flat surfaces of two appropriate washers. Saddle-shaped water off-takes are well known and are used in great extent and in different arrangements in rigid pipes where the cross-section of the pipe is fixed.

The saddle-shaped flanges and washers imitate and follow the surface of the hose and according to the hose diameter and to the desired angle between the tubular insert and its receiving tubular member, particular configurations (shapes) of the tubular insert flange and the washer-like members should be used. In contrast, the present patent application provides a sole firing with characteristic conical surfaces that can be used pratically for the whole range of the existing lay-flat hoses existing in the market from 24 mm to 240 mm (from 1 inch up to 10 inches)) providing full water tightness. This water tightness can by no means be achieved, particularly as hydraulic pressure increases, in the case of compression of the lay-flat hose walls between washers with flat surfaces.

The above mentioned problems led to the attempt of inventing a fitting ease to fit on the flexible layflat hose and ensuring water tightness.

In this concept, the first objective of the present invention is to offer a special fitting for water off-take from the flexible layflat hose, preventing any water leakage at the point of connection of the fitting with the hose.

Another objective of this invention is to solve problems of initial cost, installation cost, endurance, functionability and life span of this fitting, by realising various structural and assemblying combinations/solutions, which will be presented and described analytically herebelow and whereby all the forementioned advantages of the new fitting will become obvious. The invention will be better understood by the specialists of the state of the art technique, by referring to the drawings attached to this description, in which some preferred applications of this invention are indicatively and not restrictively shown.

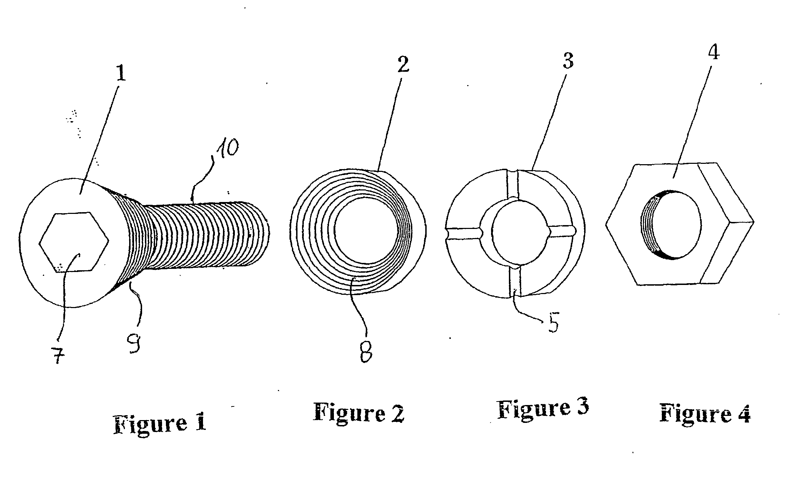

Figure 1 shows in perspective view the actual body of the water off-take fitting.
Figure 2 shows perspectively the conical sealing ring.
Figure 3 shows perspectively the grooved washer.

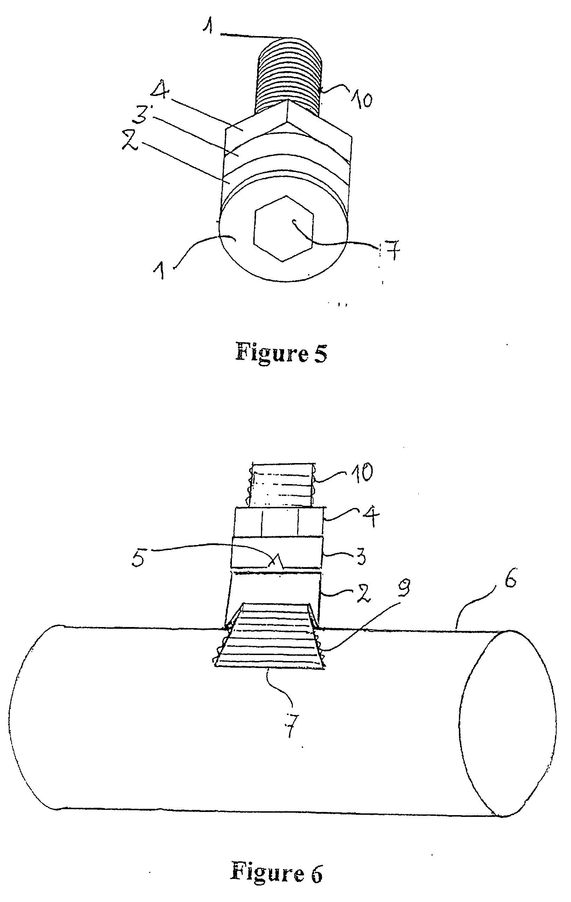

Figure 4 shows perspectively the screw nut tightening all the previous parts on the body of the water off-take 1.
Figure 5 shows perspectively the order of connecting up the previous four items one after the other.
Figure 6 shows in a cross-sectional side view the order of mounting the four items on the flexible layflat water hose.

Referring to a selected indicative example of industrial manufacturing of the invented fitting, a listing of the main components of the fitting is given herebelow, with reference to the muneration of the components on the attached drawings, whereby the components are represented not in scale but simply in terms of their size relative to each other.

According to the preferred indicative application of the invented special fitting for the water off-take from a flexible layflat hose, the terminology of the main components of the present invention is the following:
1. Water off-take body. It consists of the conical part no. 9, which has reliefed coaxial contoured grooves and of the thread no. 10. The body is placed on the hose no. 6 in such a way that the conical part 9 is placed inside the hose 6 and the thread 10 protrudes from the hole drilled on hose 6, to accommodate the mounting of the body 1. The hole drilled on the wall of the hose 6 has a slightly shorter diameter than that of the thread 10.
2. Conical sealing ring. It has an inner conical surface 8 with reliefed coaxial contoured grooves, similar to the ones of conical part 9. During tightening of the conical ring on the body 1, the wall of the hose 6 is compressed between the conical part 9 and the conical surface 8 and thus full tightness (sealing) is accomplished.
3. Washer placed between the conical ring 2 and the tightening nut. It has on one surface radiated grooves, which act as an escape route, should there be any water leakage through the threading 10 of the water off-take.
4. Tightening nut with internal threading similar to that of the body 1. It could also be a part of the fitting which will be further connected with the water off-take fitting.
5. Grooves on one side of the washer 3, to give passage to any water leakage through the thread of the water off-take.
6. Flexible layflat hose, on which a hole is drilled, suitable for the insertion of the conical part.
7. Polygonical hole on body 1, for reception of polygonical key, which facilitates tightening of body 1 onto the conical ring 2. The hole is used for the passage of water from the main line (layflat hose) to the secondary (lateral) irrigation pipe.
8. Inner conical surface of ring 2. Has coaxial contoured grooves similar to those of conical part 9.
9. Conical part of the body 1, which goes inside the hose 6 and the conical ring 2 is then compressed and fitted onto it. It has coaxial contoured grooves, so that the conical ring 2 can be tightened firmly on to it.
10. Thread on the upper part of body 1, used for screwing nut 4.

A variation of the tightening system of conical part 9 with conical ring 2 is to make body 1 with a flat ring on its end, instead and in lieu of the conical part 9 and use separate conical accessory, which will be inserted between the flat ring and the conical ring 2.

The materials for the manufacturing of the above components could be different types of plastics or metals of any desirable shape.

It should be mentioned that the invented special fitting for water off-take as described above is not restricted by the above given example of industrial manufacturing.

The invented fitting can also be made using other manufacturing methods, processes and parts, which fall within the scope of the claims of the present invention.

The hereby preferred solution to the problem of water off-take from layflat flexible hose has been made with reference to the above mentioned indicative examples of application.

## Claims

1. A special fitting for water off-take from a flexible layflat hose of any diameter, consisting of a body 1, a conical seal ring 2, a washer 3 and a tightening nut 4, and **characterized by** the fact that the body has a male conical shape and the seal ring has a female conical shape, both with relieved coaxial grooves, thus achieving full water tightness when mounted.

2. A special fitting for water off-take from a layflat hose of any diameter, according to claim 1, **characterized by** the fact that it has the lower part of the body (1), shaped as flat ring, and a separate conical accessory with coaxial grooves, which is interplaced between the flat ring of the body 1 and the conical ring 2 when mounted.

## Patentansprüche

1. Ein speziaffftting für die Wasserentnahme aus einem faltbaren Schlauch von jedem Durchmesser, dass aus einem Körper zur Wasserentnahme 1, einem kegelförmigen Ring zur Dichtung 2, einer Unterlegscheibe 3 und einer Festigungsmutter besteht und ausgezeichnet/charakterisiert **dadurch**, dass der Körper zur Wasserentnahme eine krumme kegelförmige Fläche hat, während beide Flächen reliefartige homoachsenartige Streifen haben, wobei eine hundertprozendige Dichtung geschaffen wird.

2. Ein spezialfitting für die Wasserentnahme aus einem faltbaren Schlauch von jedem Durchmesser nach Anspruch 1, ausgezeichnet/charakterisiert **dadurch**, dass der untere Teil des Hauptkörpers zur Wasserentnahme wie ein ebener Ring und ein besonderer kegelförmiger Teil/Fitting mit homoachsenartigen Streifen, der sich dem ebenen Ring von Körper 1 und dem Kegelförmigen Ring 2 zwischenfügt.

## Revendications

1. Un raccord spécial pour prise d' eau sur tuyau souple de type layflat de toute sorte de diamètres se constituant d' un corps 1, d' une bague à sceller conique 2, un baignoire 3 et un écrou de vis 4, et **caractérisé par le fait que** le corps a une forme de cône voûté et la bague à sceller une forme de cône creux ayant tous les deux une entaille coaxiale auxiliaire en sorte d'obtenir le maximum d' efficacité contre des fuites d'eau.

2. Un raccord spécial pour prise d' eau sur tuyau de type layflat de toute sorte des diamètres selon la réclamation 1, **caractérisé par le fait qu'** il pourrait avoir la partie inférieure du corps principal sous forme de bague plate et un accessoire separé conique ayant des entailles coaxiales, à s'iterposer entre le bague plate du corps 1 et la bague conique 2.
